# EUROPÄISCHE PATENTSCHRIFT

(11) **EP 1 590 593 B1**
(45) Veröffentlichungstag und Bekanntmachung des Hinweises auf die Patenterteilung: **11.04.2007**
(21) Anmeldenummer: 04708717.6
(22) Anmeldetag: 06.02.2004
(51) Int. Cl.: F16L 55/07

(54) **ANBOHRVENTIL MIT SICHERHEITSFUNKTION**
TAPPING VALVE HAVING A SAFETY FUNCTION
SOUPAPE AUTO-PERCEUSE A FONCTION DE SECURITE

(30) Priorität: 06.02.2003 DE 10304952
(43) Veröffentlichungstag der Anmeldung: 02.11.2005
(73) Patentinhaber: Ernst Schmieding GmbH + Co. KG, 59439 Holzwickede (DE)
(72) Erfinder: BERGER, Wolfgang, 32257 Bünde (DE)
(74) Vertreter: Bobzien, Hans Christoph
(86) Internationale Anmeldenummer: PCT/DE2004/000209
(87) Internationale Veröffentlichungsnummer: WO 2004/070254

(56) Entgegenhaltungen:
- DE-A- 19 801 851
- DE-U- 20 110 758
- FR-A- 1 388 747

## Beschreibung

Die Erfindung betrifft Sicherheitsventil für eigen-/fremdmediumgesicherte Leitungen, bestehend aus einem Ventilgehäuse mit einer medienzuführenden Einlassöffnung, einer Auslassöffnung, an der eine Doppelrohrleitung vorgesehen ist, die eine innere Rohrleitung und ein die Rohrleitung umschließendes Schutzrohr aufweist, sowie einem mit einem Ventilsitz in Schließstellung dichtend zusammenwirkenden Dichtkegel.

Derartige Sicherheitsventile werden zum Beispiel für die Regelung der Medienführung in Erd- und frei verlegten Leitungen für technische Gase, Wasser und andere Medien eingesetzt, so zum Beispiel zur Zuführung von Wasser in ein Haus. Das Medium wird üblicherweise seitlich versetzt neben der Hauswand durch eine zuführende Leitung in die Nähe des Hauses geführt und über eine quer zur Längserstreckungsrichtung der Leitung verlaufende Verbindungsleitung in das Haus geführt. In dem Abschnitt zwischen der Leitung und der Hauswand ist das. Sicherheitsventil angeordnet. Mit diesem ist es möglich, die Rohrleitung so zu sichern, dass bei einem Defekt oder einer Manipulation an der Rohrleitung die Armatur selbsttätig ohne Hilfsenergie die Zufuhr des Mediums absperrt und somit Nachströmen bzw. Ausfließen aus der defekten Rohrleitung bzw. Verbindungsleitung verhindert wird.

Der Anschluss der Verbindungsleitung mit der Leitung erfolgt vorzugsweise mit einer Anbohrarmatur. An der Anbohrarmatur ist ein sich quer zur Längsrichtung der Leitung erstreckendes Anschlussstück ausgebildet, an dessen Ende das Sicherheitsventil befestigt ist.

In den Boden eingeleitete Spannungen, zum Beispiel bei der Komprimierung des Bodens, können auf dieses Anschlussstück übertragen werden und zu Spannungen in der Verbindung zwischen dem Ventil und Anschlussstück führen. Diese Spannungen können die Funktionsfähigkeit des Ventils negativ beeinflussen oder das Ventil sogar beschädigen. Ferner ist die Montage des Ventils an das Anschlussstück aufwendig und bedingt eine gewisse Bauhöhe, da das Ventil prinzipiell immer oberhalb der medienführenden Leitung angeordnet sein muss. Dieses birgt insbesondere vor dem Hintergrund Probleme, dass die medienführenden Leitungen im Hausanschlussbereich zunehmend niedriger verlegt werden und die Ventile und Anschlusselemente somit in den Frostbereich im Erdreich gelangen.

Ein gättungsgeinäßes Sicherheitsventil ist aus dem deutschen Gebrauchsmuster DE 201.107 58.U1 bekannt.

Aufgabe der vorliegenden Erfindung ist das Vorsehen eines Sicherheitsventils, welches einfacher an der medienführenden Leitung montierbar ist.

Dieses wird erfindungsgemäß dadurch bewerkstelligt, dass der Dichtkegel an einer Hohlwelle ausgebildet ist, innerhalb derer ein Schneidelement: angeordnet ist, das im Verhältnis zur Hohlwelle axial versetzbar und in einer Sollposition arretierbar ist, und dass die Einlassöffnung unterhalb der Hohlwelle angeordnet ist.

Das erfindungsgemäße Sicherheitsventil stellt damit erstmalig ein Anbohrventil mit Sicherheitsfunktion bereit. Bei der Montage kann das Ventil, unmittelbar auf eine Anbohrbrücke oder Anbohrarmatur aufgesetzt werden, um die Einlassöffnung mit der medienführenden Leitung zu verbinden. Das Schneidelement kann durch die Hohlwelle und den Dichtsitz hindurch in den Außenmantel der medienführenden Leitung eingedreht werden, um in dieser eine Öffnung zum Austreten des Mediums aus der Leitung in das Ventil vorzusehen.

Die erfindungsgemäße Ausbildung des Sicherheitsventils ermöglicht es damit, ein Sicherheitsventil und eine Anschlussarmatur einfach in einer Baugruppe zu kombinieren.

Das erfindungsgemäße Sicherheitsventil weist ferner eine geringere Bauhöhe als bekannte Sicherheitsventile auf, da der Dichtsitz wesentlich niedriger im Verhältnis zum Ventilgehäuse angeordnet ist. Diese Ausbildung weist zudem verbesserte Strömungseigenschaften auf und ist wesentlich stabiler, da das Ventil in Einbaulage im Kraftzentrum der Armatur oberhalb der Leitung positioniert ist.

Vorteilhafterweise ist das Schneidelement so ausgebildet, dass dieses beim Eindrehen in die medienführende Leitung den aus dieser herausgeschnitten. Stopfen unlösbar aufnimmt. Beispielsweise kann dieses durch ein an der inneren Mantelfläche des Schneidelements vorgesehenes Gewinde bewerkstelligt werden. Alternativ sind Widerhaken einsetzbar.

Das erfindungsgemäße Sicherheitsventil ist mit dem Vorteil verbunden, dass eine Anschlusskappe zur Entnahme des Mediums an der Geländeoberfläche nicht mehr fluchtend oberhalb der Anbohrarmatur angeordnet sein muss. Bislang musste das Medium über eine starre Leitung, die senkrecht zur Leitung bzw. Anbohrarmatur verlief, aus der Armatur an die Geländeoberfläche geführt werden. Nunmehr kann in dem Gehäuse des Sicherheitsventils an beliebiger Stelle ein Änschlussstutzen zum Herausführen des Mediums aus dem Gehäuse vorgesehen werden, über den.dieses aus dem Sicherheitsventil zu der Anschlusskappe geführt wird. Damit ist das erfindungsgemäße Sicherheitsventil nicht nur bautechnisch einfacher, sondern ermöglicht auch eine Erhöhung der Flexibilität gegenüber der bekannt getrennten Ausführung von Sicherheitsventilen und Anschlussarmaturen.

Vorzugsweise ist zwischen dem Schneidelement und der Hohlwelle ein Bewegungsgewinde ausgebildet. Das Schneidelement kann somit bei sich in Ruhe befindlicher Hohlwelle durch Einsetzen eines Betätigungselements, z.B. eines Vierkants an einem Gestänge, in das oberseitige Ende des Schneidelements in die Mantelfläche der Leitung eingedreht werden.

Im Fall.e von Kunststoffleitungen kann das Schneidelement an seinem in Einbaulage unteren Ende mit einer kreiszylindrischen Ringschneide oder einem Fräser ausgebildet sein.

Um zu verhindern, dass sich der aus der medienführenden Leitung herausgetrennte Stopfen in die Leitung fällt, kann auf der inneren Mantelfläche der Schneidfläche der Ringschneide ein Gewinde ausgebildet sein, welches sich beim Einschneiden in die äußere Mantelfläche des Stopfens einschneidet. Auf diese Weise wird der Stopfen unlösbar in der Ringschneide aufgenommen. Vorzugsweise hat das Gewinde auf der Innenseite der Ringschneide dieselbe Gangzahl wie das Gewinde zwischen dem Dichtkegel und der Ringsehneide. Anstelle eines Gewindes können auf der Innenfläche der Schneidfläche auch andere geeignete Rastmittel vorgesehen sein, z.B. Rasthaken.

Zur Realisierung einer einfachen Verbindung zwischen dem Ventil und der Armatur ist es besonders vorteilhaft, ein Befestigungsgewinde außenseitig an der Einlassöffnung des Ventilgehäuses vorzusehen. Das Ventil braucht dann nur noch in einen Aufnahmestutzen mit korrespondierend ausgebildetem Innengewinde an der Anbohrarmatur oder Anbohrbrücke eingedreht zu werden, um die Verbindung herzustellen. Wenn die medienführende Leitung aus HDPE besteht, reicht, die Ausbildung des Schneidelements als Stanzer aus. Im Falle von härteren Kunststoffen, wie zum Beispiel PVC, hat es sich als vorteilhaft erwiesen, das Schneidelement als Fräser auszubilden. Für Stahl-oder Gussrohrleitungen kann an dem Sicherheitsventil auch ein Stahlunterteil mit einer Zusatzabsperrung (Zunge) für Anbohrgestänge ausgebildet sein.

Die Erfindung ist in den Zeichnungen anhand eines bevorzugten Ausführüngsbeispieles veranschaulicht und im Folgenden detailliert beschrieben. Es zeigen:

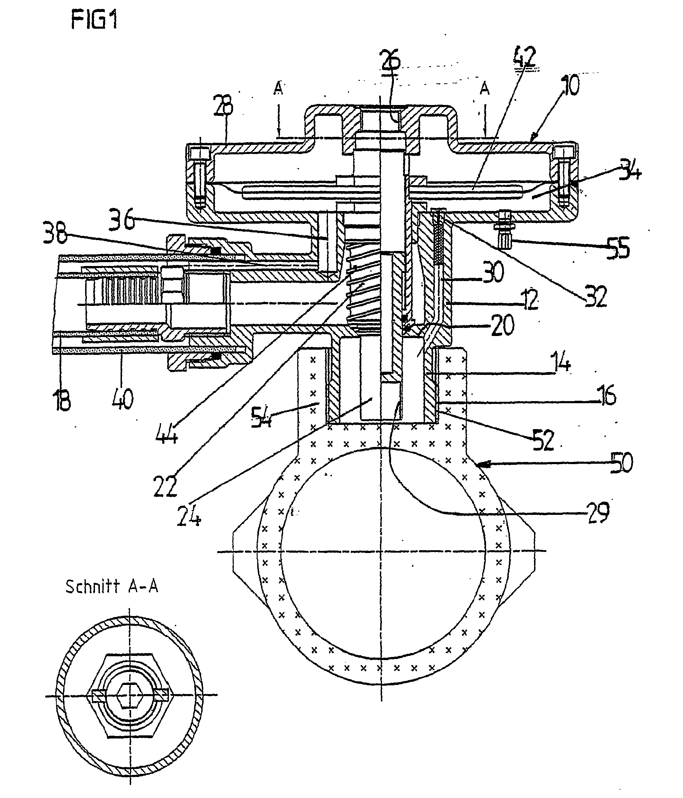

- Figur 1: einen Querschnitt durch ein erfindungsgemäßes Anbohrventil mit Sicherheitsfunktion, das auf eine Anbohrbrücke aufgesetzt ist, mit dem Schneidelement in der Stellung vor dem Einschnitt in die Anbohrbrücke und
- Figur 2: eine Seitenansicht des Anbohrventils gemäß Figur 1 nach Einschnitt des Schneidelements in die Anbohrbrücke

Das in seiner Gesamtheit.mit 10 gekennzeichnete Sicherheitsventil ist als Sicherheitsventil für eigen-/fremd-mediumgesicherte Leitungen im geschlossenen Zustand ausgebildet.

Das Sicherheitsventil 10 ist auf eine Anbohrbrücke 50 aufgeschraubt. Zu diesem Zweck ist an dem in Einbaulage unteren Ende von dem Gehäuse 12 des Sicherheitsventils 10 ein Gewindestutzen 14 einstückig angeformt, an dessen Außenseite ein Befestigungsgewinde 16 ausgebildet ist. Dieses Befestigungsgewinde 16 ist in ein korrespondierend ausgebildetes Innengewinde 52 eines Aufnahmestutzens 54 der Anbohrbrücke 50 dichtend eingeschraubt. Diese untere Seite stellt die Einlassseite des Sicherheitsventils 10 dar.

Die Auslassseite des Ventils 10 ist so ausgeführt, dass zwei konzentrisch angeordnete Rohrleitungen auf entsprechend angeordneten Stutzen montiert sind, womit eine Doppelrohrleitung gebildet wird. Die erforderliche Montage kann durch Verpressen, Verkleben öder andere geeignete Montageverfahren erfolgen. Die innere Rohrleitung 18 der Auslassseite führt den Häuptvolumenstrom des Mediums weiter zu einem Verbraucher, z. B. einem Hausanschluss.

Das Sicherheitsventil 10 ist mit einem Ventilsitz 20 ausgebildet. Nach dem Öffnen des Ventils durch Anheben des Dichtkegels 22 strömt das Medium von der Einlassseite zu der Auslassseite des Ventils.

Zur Entnahme des Mediums aus der Leitung muss die Leitung unterhalb der Anbohrbrücke 50 zunächst "angebohrt" werden. Dieses erfolgt mittels einer Ringschneide 2.4; die axial versetzbar zu dem als Hohlwelle ausgebildeten Dichtkegel 22 angeordnet ist. An der Innenseite des Dichtkegels 22 ist ein Innengewinde ausgebildet, welches ein am oberen Ende der Ringschneide 24 ausgebildetes Außengewinde kämmt. Durch die obere Öffnung 26 des Ventildeckels kann zum Anbohren ein mit einem bekannten Vierkant versehenes Gestänge eingesetzt und gedreht werden, so dass sich die Ringschneide 24 im Verhältnis zu dem Dichtkegel 22 nach unten absenkt und in das Material der Leitung einschneidet. Der dabei aus der Leitung herausgeschnittene "Stopfen" schneidet sich in ein innenseitig an der Ringschneide 24 vorgesehenes Gewinde 29 ein, um ein unerwünschtes Herausfallen des Stopfens nach dem Anbohren zu verhindern.

Die vorliegende Ringschneide 24 ist zum Anschneiden einer Leitung aus HDPE gedacht. Sofern eine Leitung aus dem härteren PVC zum Einsatz kommt, müsste die Ringschneide durch einen Fräser ersetzt werden.

In der vorliegenden Ausführungsform ist das Sicherheitsventil für eigen-/fremdmediumgesicherte Leitungen im geschlossenen-Zustand ausgebildet, wie dieses in dem deutschen Gebrauchsmuster 201 107 58 niedergelegt ist.

Auch gemäß der vorliegenden Ausführungsform ist vor dem Ventilsitz 20 in dem Gehäuse 12 ein Kanal 30 vorgesehen, der durch eine Düse 32 in das Membrangehäuse 34 mündet. Das Gas strömt durch das Membrangehäuse 34 in den Auslasskanal 36 und gelangt schließlich durch die Auslassbohrung 38 in den Ringraum zwischen dem Innenrohr 18 und dem äußeren Schutzrohr 40.

Sobald dieser Zwischenraum komplett gefüllt ist, baut sich in dem Ringraum und dem Membrangehäuse 34 der gleiche Druck auf wie in der Leitung. Der Druck erzeugt auf die Membran 42 eine Kraft, so dass der Dichtkegel 22 gegen die Federkraft der Spiralfeder 44 aus dem Ventilsitz 20 gehoben wird und das.Ventil öffnet. In geöffnetem Zustand strömt das Medium unmittelbar aus der medienführenden Armatur in die innere Rohrleitung 18.

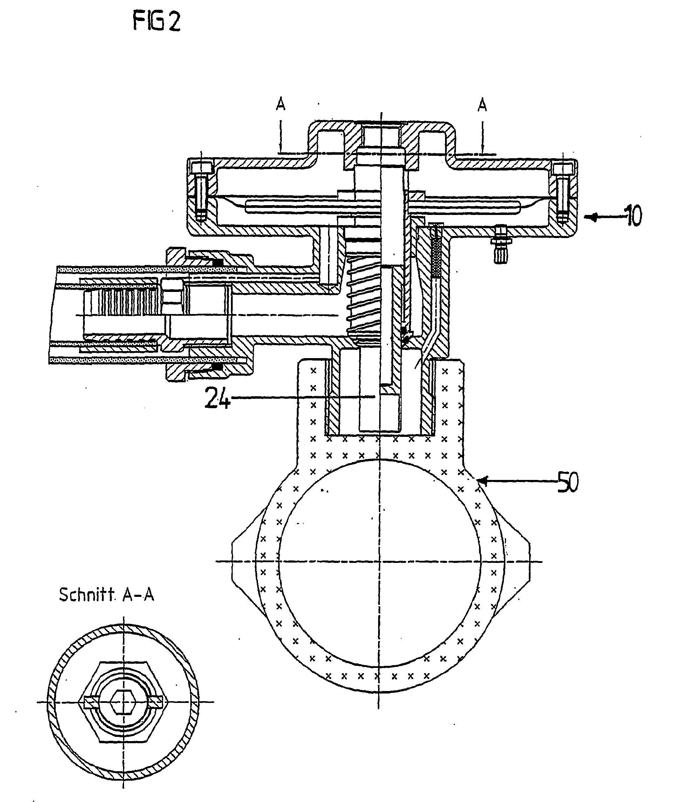

Zur einwandfreien Funktionsweise muss natürlich sichergestellt sein, dass bei der Durchführung der Drehbewegung der Ringschneide 24 kein Drehmoment auf den Dichtkegel 22 übertragen wird, da dieses sonst die Funktionsweise der Membran 42 negativ beeinflussen würde. Wie insbesondere aus Figur 2 zu entnehmen ist, erfolgt das Anbohren der Leitung mittels der Ringschneide 24 bei geschlossenem Ventil.

Wird kein Medium verbraucht, so dass kein Medium durch die Leitung und das Sicherheitsventil strömt, stellt sich in dem ganzen System der gleiche Anlagendruck ein. In diesem Zustand ist die Federkraft, die den Dichtkegel 22 in den Ventilsitz 20 drückt, kleiner als die entgegengerichtet wirkende Kraft, die sich aufgrund des Druckes auf die Membranfläche ergibt, so dass das Sicherheitsventil 10 geöffnet bleibt.

Sollte jetzt ein technischer Defekt oder eine Manipulation an der Verbindungsleitung zwischen dem Sicherheitsventil und dem Verbraucher erfolgen, so dass das äußere Schutzrohr 40 beschädigt wird, hat dieses einen Druckabfall zur Folge. Der Druckabfall in dem Membrangehäuse 34 bewirkt, dass die Federkraft der Spiralfeder 44. den Dichtkegel 22 in den Ventilsitz 20 drückt und dadurch das Ventil schließt. Die Federkraft und die aus Anlagendruck und Membranfläche entstehende Gegenkraft müssen so ausgelegt werden, dass trotz des nachströmenden Gases durch den Kanal 30 und die Düse 32 die Federkraft groß genug ist, um das Ventil zu schließen.

Die Verbindung zwischen der Anbohrarmatur und dem Ventilgehäuse kann selbstverständlich auch in anderer Weise erfolgen, so zum Beispiel mit einem Bajonettverschluss.

Der zuvor beschriebene Anschlussstutzen 55, zur Entnahme des Mediums, ist unterseitig an dem Gehäuse 12 vorgesehen.

Die erfindungsgemäße Ausgestaltung des Sicherheitsventils ermöglicht eine besonders "niedrige" Anordnung des Ventilsitzes im Ventilgehäuse. Dieses realisiert die gewünschte "flache" Bauweise der Kombination aus Sicherheitsventil und Anbohrarmatur und gewährleistet gute Strömungseigenschaften des Mediums von der Einlassseite in die Auslassseite.

### Bezugszeichenliste

- 10: Sicherheitsventil
- 12: Gehäuse
- 14: Gewindestutzen
- 16: Befestigungsgewinde
- 18: innere Rohrleitung
- 20: Ventilsitz
- 22: Dichtkegel
- 24: Ringschneide
- 26: Öffnung
- 28: Ventildeckel
- 29: Gewinde
- 30: Kanal
- 32: Düse
- 34: Membrangehäuse
- 36: Auslasskanal
- 38: Auslassbohrung
- 40: äußeres Schutzrohr
- 42: Membran
- 44: Spiralfeder
- 50: Anbohrbrücke
- 52: Innengewinde
- 54: Aufnähinestutzen
- 55: Anschlussstutzen

## Patentansprüche

1. Sicherheitsventil (10) für eigen-/ fremdmediumgesicherte Leitungen, bestehend aus einem Ventilgehäuse mit einer medienzuführenden Einlassöffnung, einer Auslassöffnung an der eine Doppelrohrleitung vorgesehen ist, die eine innere Rohrleitung (18) und ein die Rohrleitung (18) umschließendes Schutzrohr (40) aufweist, sowie einem mit einem Ventilsitz (20) in Schließstellung dichtend zusammenwirkenden Dichtkegel (22), **dadurch gekennzeichnet, dass** der Dichtkegel (22) an einer Hohlwelle ausgebildet ist, innerhalb derer ein Schneidelement angeordnet ist, das im Verhältnis zur Hohlwelle axial versetzbar und in einer Sollposition arretierbar ist, und dass die Einlassöffnung angeordnet ist an der Einlaßseite des Ventilsitzes (20) und der Hohlwelle axial gegenüberliegend.

2. Sicherheitsventil (10) nach Anspruch 1, **dadurch gekennzeichnet, dass** das zwischen dem Schneidelement und der Hohlwelle ein Bewegungsgewinde ausgebildet ist.

3. Sicherheitsventil (10) nach einem der vorhergehenden Ansprüche, **dadurch gekennzeichnet, dass** an dem Ventilgehäuse im Bereich der Einlassöffnung ein Gewinde ausgebildet ist.

4. Sicherheitsventil (10) nach einem der vorhergehenden Ansprüche, **dadurch gekennzeichnet dass** das Schneidelement als Stanzer ausgebildet ist.

5. Sicherheitsventil (10) nach einem der vorhergehenden Ansprüche, **dadurch gekennzeichnet dass** das Schneidelement als Fräser ausgebildet ist.

6. Sicherheitsventil (10) nach einem der vorhergehenden Ansprüche, **dadurch gekennzeichnet , dass** die Einlassöffnung mit einer Anbohrbrücke (50) oder einer Anbohrarmatur verbunden ist.

## Claims

1. A safety valve (10) for lines which are inherently safeguarded/safeguarded in relation to external medium, comprising a valve housing having a media-feeding inlet opening, an outlet opening at which there is provided a double pipe line which has an inner pipe line (18) and a protective pipe (40) enclosing the pipe line, and a sealing cone (22) which sealingly co-operates with a valve seat (20 in the closed position, **characterised in that** the sealing cone (22) is provided on a hollow shaft within which is arranged a cutting element which can be axially displaced relative to the hollow shaft and which can be arrested in a reference position and that the inlet opening is arranged at the inlet side of the valve seat (20) and axially opposite to the hollow shaft.

2. A safety valve (10) according to claim 1 **characterised in that** a motion screwthread is provided between the cutting element and the hollow shaft.

3. A safety valve (10) according to one of the preceding claims **characterised in that** a screwthread is provided on the valve housing in the region of the inlet opening.

4. A safety valve (10) according to one of the preceding claims **characterised in that** the cutting element is in the form of a stamping member.

5. A safety valve (10) according to one of the preceding claims **characterised in that** the cutting element is in the form of a milling cutter.

6. A safety valve (10) according to one of the preceding claims **characterised in that** the inlet opening is connected to a tapping bridge (50) or a tapping fitting.

## Revendications

1. Soupape de sécurité (10) pour des « conduites de fluides à sécuriser », constituée d'un corps de soupape avec une ouverture d'entrée amenant un fluide, d'une ouverture de sortie au niveau de laquelle il est prévu une conduite double présentant un conduit intérieur (18) et un tube protecteur (40) enveloppant le conduit (18), ainsi qu'un cône d'étanchéité (22) concourant en étanchéité avec un siège de soupape (20) en position de fermeture, **caractérisée en ce que** le cône d'étanchéité (22) est formé sur un arbre creux, au sein duquel est disposé un élément de coupe qui peut être déplacé axialement par rapport à l'arbre creux et être bloqué dans une position prescrite, et **en ce que** l'ouverture d'entrée est disposée en face axialement au niveau du côté sortie du siège de soupape (20) et de l'arbre creux.

2. Soupape de sécurité (10) selon la revendication 1, **caractérisée en ce qu'**un filet de mouvement est formé entre l'élément de coupe et l'arbre creux.

3. Soupape de sécurité (10) selon l'une quelconque des précédentes revendications, **caractérisée en ce qu'**un filetage est formé au niveau du corps de soupape dans la zone de l'ouverture d'entrée.

4. Soupape de sécurité (10) selon l'une quelconque des précédentes revendications, **caractérisée en ce que** l'élément de coupe est conçu en tant que perforateur.

5. Soupape de sécurité (10) selon l'une quelconque des précédentes revendications, **caractérisée en ce que** l'élément de coupe est conçu en tant que fraise.

6. Soupape de sécurité (10) selon l'une quelconque des précédentes revendications, **caractérisée en ce que** l'ouverture d'entrée est reliée à un raccord de piquage (50) ou une robinetterie de perçage.
